# EUROPEAN PATENT SPECIFICATION

(11) **EP 1 564 636 B1**
(45) Date of publication and mention of the grant of the patent: **10.09.2008**
(21) Application number: 04106650.7
(22) Date of filing: 16.12.2004
(51) Int. Cl.: G06F 9/445, G06F 11/14

(54) **Tape drive apparatus for storing boot image data and for booting the system**
Magnetbandlaufwerk zum Speichern eines Boot-Images und zum Systemstart
Dispositif d'entraînement de bande magnétique pour stocker une image de réamorçage et pour démarrer le système

(30) Priority: 20.12.2003 GB 0329574
(43) Date of publication of application: 17.08.2005
(73) Proprietor: Hewlett-Packard Development Company, L.P., Houston, TX 77070 (US)
(72) Inventor: Martin, Christopher, Bath, Somerset BA2 2EH (GB)
(74) Representative: Marsh, David John

(56) References cited:
- EP-A- 0 978 785
- GB-A- 2 379 060
- US-A- 5 727 213
- US-A1- 2002 163 760

## Description

### Field of the invention

The present invention relates to the field of data backup and recovery, and more particularly without limitation to tape drives.

### Background and prior art

It is known to backup data stored on primary storage, such as a hard disk, of a computer system in order to protect against a disaster that might otherwise irrecoverably destroy all or part of the data. Disasters for example may be fire, flood, computer virus or simply accidental deletion of data. One of the main reasons for using magnetic tape as the backup storage medium is that it provides a stable, reliable and relatively cheap option for storing large volumes of backed-up data.

Backup application software which executes on the computer system typically provides the functions for enabling such computer system data to be both backed-up to, and restored from, tape media, which is written to and read from by a tape drive. Well-known backup application software includes 'Replica^{™}' from Stac, 'ArcServe^{™}' from Computer Associates, 'BackupExec^{™}' from Veritas and 'Data Protector^{™}' from HP. Well-known tape drives include DDS^{™} and LTO^{™} compliant tape drives, both available from HP.

In the event of a disaster, such as hard disk failure or even system destruction, typically, a priority is to rebuild a working system as soon as possible. This requires the computer hardware to be restored to the same state as it was before the disaster, which can take hours or even days, even before the file system can be restored. Generally, a significant amount of human intervention is required to complete this process.

In order to reduce the time and human intervention overhead of restoring a computer system after a disaster a backup application software provides a socalled disaster recovery (DR) solution, which enables a computer system to be restored in an expedited manner to a state which existed before a disaster occurred. Such a scheme typically involves at least installing and configuring a minimal operating system, tape drivers and the backup application software (or the requisite parts thereof) itself.

Known DR solutions typically require a user to generate a set of DR floppy disks. The DR floppy disks may be used to boot the computer system, when it is not possible to boot from the hard disk drive, and execute application software for recovering a backed-up copy of the file system from tape media. The DR floppy disks typically load and execute a minimal version of the operating system along with components of application software comprising DR functionality, thus providing sufficient functionality, for example, for the computer to build new disk partitions, access a tape drive and restore the data from tape media.

The DR operating system is required to reflect the exact hardware configuration of the computer system on which it is to be installed, otherwise it would not be possible to communicate with storage devices such as tape drives.

Typically, therefore, DR floppy disks need to be regenerated by a user whenever the system hardware configuration changes, and particularly when a SCSI (Small Computer Systems Interface) configuration changes. For example, if a new SCSI Host Bus Adaptor (HBA) is added to a server, with a respective new device driver, this device driver needs to be added to the DR floppy disks so that the new SCSI HBA is recognised when rebuilding the computer system.

A reason why DR floppy disks are used is that a floppy disk drive is one of the standard 'initial program load devices' (IPLD), which practically every PC is configured to 'boot' from. Herein, 'standard' as applied to an IPLD, implies that the PC is physically programed to recognise the device for the purposes of booting. Currently, other standard IPLDs, sometimes known as BAIDS (BIOS Aware Initial Program Load Devices), include the first hard disk drive in a PC and, more recently, the first CD-ROM drive in a PC. Generally, however, an IPLD can be virtually any device that has the ability to load and execute a PC operating system.

It is known to boot from a CD-ROM drive, as long as the CD-ROM complies with the ISO 9660 CD-ROM standard, as extended by the 'El Torito' Bootable CD-ROM Format Specification, Version 1.0, January 25, 1995, created jointly by IBM Corporation and Phoenix Technologies Ltd.

The 'El Torito' bootable CD-ROM Format Specification provides the ability to catalogue boot images and to selectively boot from any single image stored on a CD-ROM. A BIOS with multiple boot-image capability can access any one of a number of bootable disc images listed in the booting catalogue stored on the CD-ROM. The boot-catalogue is a collection of 20 byte entries including a validation entry, an initial/default entry, a section entry, and section entry extension. The boot catalogue allows a computer system to pick a proper boot image and then to boot from the selected image.

Booting from CD-ROM in a similar manner is also considered in detail in US 5,727,213. As described, to boot from CD-ROM, a PC's BIOS (basic input/output system) needs to specifically support reading boot record data from a CD-ROM, typically, as well as from a floppy disk or hard disk. US 5,727,213 also proposes that tape media may also serve as a boot source, subject to the PC BIOS being modified to detect and read boot record data from a tape media. To date, however, PC BIOS standards do not support booting from tape media.

In a system which is bootable from a CD-ROM, US 5,727,213 specifies that, to read boot record data from a CD-ROM, read commands directed to the floppy disk drive need to be re-directed to the CD-ROM drive during a read data part of the boot process. In addition, a modified SCSI driver of the PC needs to convert the 512 byte sectors conventionally used by hard disk and floppy disk into 2 Kbytes sectors conventionally used by a CD-ROM drive.

In view of the possibility of booting from CD-ROM, it would obviously also be possible to generate one or more DR CD-ROMs to replace the DR floppy disks.

However, there would be little advantage in adopting this approach, and a significant cost increase. In particular, it would still be onerous for the user to have to generate, maintain and keep safe the DR CD-ROMs.

WO00/08561 shows a tape drive configured to operate as a bootable device for a PC. The tape drive has two modes of operation: the first mode in which it operates as a normal tape drive and the second in which it emulates a bootable CD-ROM drive.

Firmware provides both the normal mode of operation, in which the tape drive behaves as a tape drive, and the disaster recovery (DR) mode of operation, in which the tape drive is arranged to emulate a CD-ROM drive. The CD-ROM drive emulation is achieved in part by configuring the tape drive to identify itself to the PC as a CD-ROM drive. With the ability to emulate a CD-ROM drive, the tape drive can act as an 'initial program load device' (IPLD).

Whether the tape drive operates in normal mode or DR mode is determined by user selection. The user selection of mode may be performed without the need for any additional tape drive hardware by using the tape drive eject button; when the tape drive is powered on the eject button held down, the DR mode of operation is selected, otherwise the normal mode is selected.

This selection function is achieved by the tape drive's firmware that checks the status of the eject button during a power-on self-test sequence. Alternatively, DR mode can be selected by holding the eject button down for a long time period (such as 5 seconds), when the tape drive is already powered on, by the firmware which checks the length of the period the eject button is held down to determine whether the operation is an eject or the user selecting DR mode.

US patent application publication number 2002/00163760A1 shows a tape drive with control electronics adapted to determine that a tape cartridge is write-protected. In case the tape cartridge is write-protected the tape drive is configured as a bootable device in response to a disaster recovery request. This has the drawback that any write-protected tape cartridge is classified as containing bootable data even if this is not the case. Another disadvantage is that a disaster recovery request is required.

### Summary of the invention

The present invention provides for a sequential storage device and a method of storing boot image data using a sequential storage device, such as a tape drive. Boot image data that is received by the sequential storage device is transferred to a tape cartridge having a sequential storage medium. Further indicator data indicative that the data transferred to the sequential storage medium is boot image data is transferred to a non-volatile storage location of the tape cartridge.

In accordance with a preferred embodiment of the invention the sequential storage medium itself is used as the non-volatile memory for storing of the data indicative of the boot image data. Alternatively a cartridge memory of the tape cartridge is used for storing the data indicative of the boot image data. Preferably the data indicative of the boot image data is stored in a predefined storage location of the non-volatile memory.

In accordance with a further preferred embodiment of the invention backup data is received from a computer, such as a media server computer or directly from the computer having a primary storage to be backed up. The sequential storage device makes a determination whether the backup data is boot image data or not. In case the backup data is in fact boot image data a corresponding tag or flag is stored in the predetermined storage location of the non-volatile memory of the tape cartridge.

In accordance with a further preferred embodiment of the invention the data indicative of the boot image data is stored in the non-volatile memory of the tape cartridge in response to an external command. For example the external command is sent from a backup application program in order to set the tag or flag on the predetermined storage location of the non-volatile memory.

Further the invention provides for a method of booting from a sequential storage device. The non-volatile memory of a tape cartridge loaded in the sequential storage device is read in order to determine whether boot image data is stored on the sequential storage medium. If this is the case the sequential storage device starts emulating a bootable device.

This is particularly advantageous for the purpose of disaster recovery. In the case of disaster recovery it is no longer necessary to manually switch the sequential storage device into disaster recovery mode. Rather the sequential storage device starts emulating a bootable device when data on the tape cartridge indicative of the presence of boot image data on the sequential storage medium is detected. This has the advantage that the user does not need to be instructed to manually switch the tape drive apparatus into disaster recovery mode when a disaster recovery procedure is to be performed.

In accordance with a preferred embodiment of the invention a tape library apparatus comprises at least one tape drive apparatus of the invention. In a typical tape library the individual tape drives are often not conveniently accessible. In particular the eject button of a tape drive in a tape library may not be conveniently accessible by a user. The present invention is particularly advantageous in that it facilitates use of a tape drive as a bootable device without any manual intervention by a user in a tape library.

### Brief description of the drawings

In the following a preferred embodiment of the invention will be described, by way of example only, and with reference to the drawings in which:
- Figure 1: is a schematic block diagram showing a tape drive coupled to a computer,
- Figure 2: is a flow diagram illustrating the steps involved in storing a boot image on tape media,
- Figure 3: is a flow diagram illustrating an alternative embodiment for storing a boot image on tape media,
- Figure 4: is a flow diagram illustrating the steps involved in booting from the tape drive.

### Detailed description

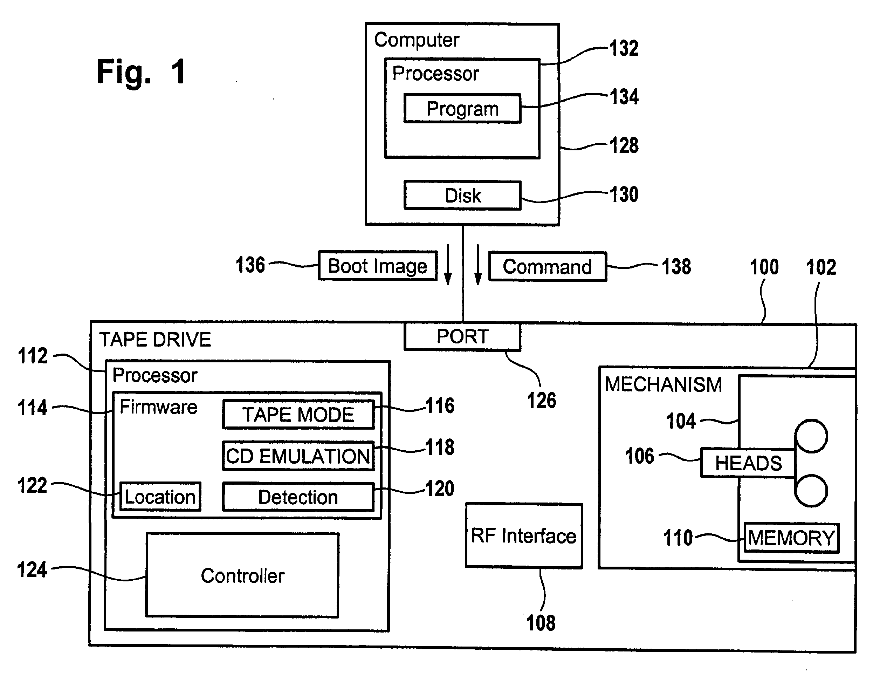

Figure 1 shows tape drive 100 having tape mechanism 102 that loads and ejects tape media, or tape cartridge, 104 and winds a sequential storage medium (not shown) of the tape media 104 forwards or backwards as required for reading and writing data. In an LTO (Linear Tape Open) tape drive, the tape is moved past the read/write heads 106 in a linear recording motion known as serpentine recording. Tape drive 100 has RF interface 108 that serves to communicate with cartridge memory 110 of tape media 104. Preferably RF interface 108 is compliant with the LTO specification.

Processor 112 of tape drive 100 serves to execute firmware 114. Firmware 114 comprises instructions 116 for providing the normal mode of operation in which the tape drive 100 behaves as a tape drive, and instructions 118 for emulation of a bootable device. Preferably instructions 118 provide an emulation of a CD-ROM drive in accordance with the 'El Torito' specification.

Further firmware 114 comprises instructions 120 for detecting of boot image data stored on tape media 104. A location indication 122 that identifies a predetermined storage location is also comprised in firmware 114. Depending on the implementation location indication 122 can be a offset in order to indicate a position on the tape media where the tag indicating the presence of boot image data is stored. Alternatively location indication 122 points to a storage location of cartridge memory 110.

Further processor 112 runs control program 124 that controls operation of tape drive 100. Tape drive 100 has port 126 for coupling of tape drive 100 to computer 128. Computer 128 has primary storage provided by disk 130 that requires backup. Further computer 128 has processor 132 that runs backup application program 134.

In operation tape media 104 is loaded into mechanism 102 of tape drive 100. Backup application program 134 reads data stored on disk 130 in order to provide boot image data 136 to tape drive 100. Tape drive 100 receives boot image data 136 at its port 126.

As tape drive 100 is in its default tape drive mode instructions 116 are executed which sequentially store boot image data 136 on tape media 104. Further backup application program 134 sends command 138 to tape drive 100 that is also received at port 126. In response to command 138 instructions 116 store a tag on the storage location as indicated by location indication 122.

This tag marks tape media 104 as containing boot image data. In case location indication 122 points to a location on the tape the tag is stored on this tape location. If location indication 122 points to a location of cartridge memory 110 the tag is stored in cartridge memory 110, in the case of LTO by means of RF interface 108.

As an alternative to command 138 instructions 116 examine the backup data received from backup application program 134 for the presence of boot image data 136. If boot image data 136 is identified in the data stream received from backup application program 134 the tag is stored on the location as indicated by location indication 122. In this instance it is not necessary that backup application program 134 sends command 138 as tape drive 100 itself makes a determination whether it receives normal backup data or boot image data from backup application program 134. In either case, as a result tape media 104 is obtained that stores boot image data 136.

In case the data stored on disk 130 of computer 128 is lost, e.g. due to a failure of disk 130, disk 130 is replaced by a new disk. In order to perform a disaster recovery operation tape media 104 with the stored boot image 136 is loaded into tape drive 100. Loading of tape media 104 invokes instructions 120 that read the memory location as defined by location indication 122.

This means that either the tape media 104 is read as at an offset position given by location indication 122 or a memory location of cartridge memory 110 is read by means of RF interface 108. As boot image data 136 has been stored on tape media 104 instructions 120 detect the corresponding tag.

As a consequence instructions 118 are invoked in order to start the CD-ROM emulation. Now tape drive 100 appears like a CD-ROM drive at its port 126. Next computer 128 is switched on. When computer 128 boots it checks its local disk 130 for the presence of a boot image. As disk 130 has been replaced no such bootable data is found. As a consequence computer 128 goes on and checks the emulated CD-ROM device at port 126 for the presence of a boot image. In response to the corresponding inquiry command the bootable data is read by tape drive 100 from tape media 104. The bootable data is output at port 126 by the CD-ROM emulation provided by instructions 118 such that computer 128 can boot from tape drive 100.

Preferably tape media 104 is compliant with the ULTRIUM LTO standard. Such tape cartridges are commercially available from Hewlett Packard (www.hp.com/go/ultrium). In this instance cartridge memory 110 is implemented as an intelligent memory chip embedded in the cartridge, referred to as the LTO-CM. It uses RF interface 108 that eliminates the need for a physical power or signal or connection between tape media 104 and tape drive 100. The LTO-CM is used for storing information which in other tape formats may be stored in the header at the beginning of the tape.

It is to be noted that computer 128 can be a media server computer. In this instance computer 128 receives backup data from other computers connected to it which computer 128 then provides as bootable data to tape drive 100.

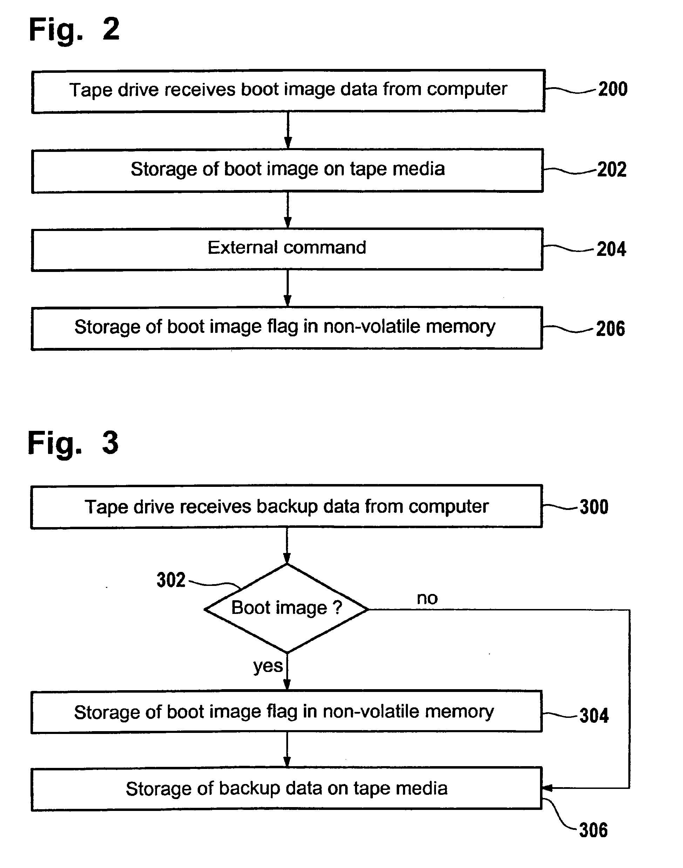

Figure 2 shows a flowchart illustrating one method of operating tape drive 100 of Figure 1. In step 200 the tape drive receives boot image data from a computer that is connected to it. In step 202 the boot image data is stored on tape media loaded into the tape drive. In step 204 the tape drive receives an external command from the computer. The external command indicates that boot image data has been provided in step 200. In response to the external command received in step 204 the tape drive stores a tag that indicates the presence of boot image data on the tape media. The tag is stored in non-volatile memory associated with the tape media, e.g. on the tape media itself or the cartridge memory of the tape media (step 206).

Figure 3 shows an alternative method. In step 300 backup data is received by the tape drive. In step 302 the tape drive checks whether the backup data is normal backup data or boot image data. This determination can be performed based on the format of the received backup data. If the backup data is not boot image data the control goes to step 306 where the backup data is stored on the tape media. In case the backup data is in fact boot image data the control goes to step 304. In step 304 a tag is stored in non-volatile memory, e.g. on the tape media itself or the cartridge memory of the tape media. Next step 306 is performed in order to store the backup data containing the boot image data on the tape media.

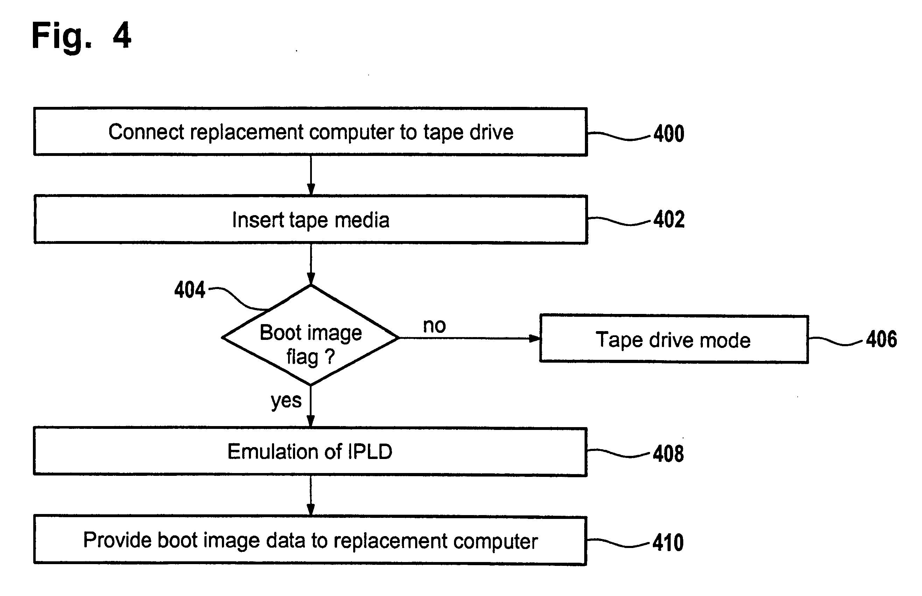

Figure 4 illustrates a disaster recovery operation. For example a computer is lost or stolen and needs replacement. In step 400 the replacement computer is connected to the tape drive. In step 402 the tape media is loaded into the tape drive. The tape media stores the boot image that has been created in accordance with the methods of Figure 2 or 3.

In step 404 the tape drive checks whether the boot image tag in the non-volatile memory is set or not. If the boot image tag is not set the tape drive continues to operate in its normal tape drive mode (step 406). However, in the case considered here the tape media does in fact contain boot image data and the boot image tag is thus set. As a consequence the tape drive starts emulation of an initial program load device (IPLD), such as a CD-ROM (step 408). This way the boot image data stored on the tape media is provided to the replacement computer in step 410 in order to perform the disaster recovery.

### REFERENCE NUMERALS

- 100: tape drive
- 102: tape mechanism
- 104: tape media
- 106: read/write heads
- 108: RF interface
- 110: cartridge memory
- 112: processor
- 114: firmware
- 116: instructions
- 118: instructions
- 120: instructions
- 122: location indication
- 124: control program
- 126: port
- 128: computer
- 130: disk
- 132: processor
- 134: backup application program
- 136: boot image data
- 138: command

## Claims

1. A tape drive apparatus (100) operable to:
- receive boot image data (136),
- transfer the boot image data to a sequential storage medium of a tape cartridge (104),
- transfer to a non-volatile storage location of the tape cartridge (104) indicator data indicative that the data transferred to the sequential storage medium is boot image data.

2. The tape drive apparatus of claim 1, wherein the non-volatile storage location is on the sequential storage medium.

3. The tape drive apparatus of claim 1 or 2, wherein the non-volatile storage location is in a semi-conductor memory (110) of the tape cartridge.

4. The tape drive apparatus of claim 1, 2, or 3, wherein the indicator data is transferable by means of a wireless interface (108) to the non-volatile storage location.

5. The tape drive apparatus of claim 1 comprising:
- data transfer apparatus for transferring bootable data between the loaded tape cartridge (104) and the tape drive apparatus (100),
- a component for reading a predetermined storage location of a non-volatile storage location of the tape cartridge in order to determine a presence of an indicator indicative of bootable data stored on the tape cartridge,
- an emulation apparatus for emulating a bootable device in response to a detection of the indicator.

6. The tape drive apparatus of claim 5, wherein the component for reading the predetermined storage location is provided by the data transfer apparatus.

7. The tape drive apparatus of claim 6, wherein the component for reading the predetermined storage location is adapted to read the indicator from a cartridge memory (110).

8. A method of storing boot image data, the method comprising:
- receiving the boot image data (136),
- transferring the boot image data to a sequential storage medium of a tape cartridge (104),
- transferring to a non-volatile storage location of the tape cartridge indicator data indicative that the data transferred to the sequential storage medium is boot image data.

9. The method of claim 8, wherein the indicator data is stored in a predetermined storage location of the non-volatile storage location.

10. The method of claim 8 or 9, further comprising receiving backup data from a computer, and determining whether the backup data comprises the boot image data (136), wherein the indicator data is only stored in the non-volatile storage location of the tape cartridge (104) in response to a determination being made that the backup data comprises the boot image data.

11. The method of claim 10, the determining comprising receiving a command, whereby the indicator data is stored in the non-volatile storage location of the tape cartridge in response to the command.

12. The method of claim 11, wherein the command is received from a computer that provides the boot image data.

13. The method of claim 10, the determining comprising examining the backup data received from the computer for identifying the backup data as boot data.

14. The method of claim 8, the method comprising for booting computer from a sequential storage device using the tape cartridge (104) including the sequential storage medium:
- reading the indicator data from a predetermined non-volatile storage location of the tape cartridge (104),
- using the indicator data to determine whether the boot image data (136) is stored on the sequential storage medium,
- in response to a determination being made that boot image data is stored on the sequential storage medium, emulating a bootable device.

15. The method of claim 14, wherein the non-volatile storage location is on the sequential storage medium.

16. The method of claim 14 or 15, the non-volatile storage location is a semi-conductor memory (110) of the tape cartridge.

17. The method of claim 14, 15 or 16, wherein a wireless interface (108) is used for reading the predetermined non-volatile storage location.

18. The method of any one of claims 14 to 17, wherein the sequential storage device is a tape drive.

19. The method of any one of claims 14 to 18, wherein the emulated bootable device is an emulated optical storage device.

20. A computer program product for controlling a sequential storage device comprising instructions for:
- receiving boot image data (136),
- transferring the boot image data to a sequential storage medium of a tape cartridge (104),
- transferring to a non-volatile storage location of the tape cartridge indicator data indicative that the data transferred to the sequential storage medium is boot image data.

21. The computer program product of claim 20 operable to read a location indication identifying a predetermined storage location of the non-volatile storage location for storage of the indicator data on the tape cartridge.

22. The computer program product of claim 20 or 21 operable to examine backup data received from an external computer for the presence of boot image data, wherein the indicator data is only stored in the non-volatile storage location of the tape cartridge in response to a determination being made that backup data comprises the boot image data.

23. The computer program product of claim 20, 21 or 22 operable to receive and execute an external command in order to store the indicator data in the non-volatile storage location of the tape cartridge.

24. The computer program product of claim 20 for controlling a sequential storage device (100) comprising instructions for:
- reading a predetermined storage location of a non-volatile storage location of a tape cartridge (104) in order to determine whether boot image data is stored on a sequential storage medium of the tape cartridge,
- if boot image data (136) is stored on the sequential storage medium, causing the sequential storage device (100) to emulate a bootable device.

25. The computer program product of claim 24 operable to cause the sequential storage device to emulate an optical storage device.

## Patentansprüche

1. Eine Bandlaufwerkvorrichtung (100), die betreibbar ist zum:
- Empfangen von Hochfahrbilddaten (136),
- Übertragen der Hochfahrbilddaten auf ein sequentielles Speicherungsmedium einer Bandkassette (104),
- Übertragen von Anzeigerdaten, die anzeigen, dass die auf das sequentielle Speicherungsmedium übertragenen Daten Hochfahrbilddaten sind, auf einen nichtflüchtigen Speicherungsort der Bandkassette (104).

2. Die Bandlaufwerkvorrichtung gemäß Anspruch 1, bei der der nichtflüchtige Speicherungsort sich auf dem sequentiellen Speicherungsmedium befindet.

3. Die Bandlaufwerkvorrichtung gemäß Anspruch 1 oder 2, bei der der nichtflüchtige Speicherungsort sich in einem Halbleiterspeicher (110) der Bandkassette befindet.

4. Die Bandlaufwerkvorrichtung gemäß Anspruch 1, 2 oder 3, bei der die Anzeigerdaten mittels einer Drahtlosschnittstelle (108) auf den nichtflüchtigen Speicherungsort übertragbar sind.

5. Die Bandlaufwerkvorrichtung gemäß Anspruch 1, die folgende Merkmale aufweist:
- eine Datenübertragungsvorrichtung zum Übertragen von hochfahrbaren Daten zwischen der geladenen Bandkassette (104) und der Bandlaufwerkvorrichtung (100),
- eine Komponente zum Lesen eines vorbestimmten Speicherungsorts eines nichtflüchtigen Speicherungsorts der Bandkassette, um ein Vorliegen eines Anzeigers zu bestimmen, der auf der Bandkassette gespeicherte hochfahrbare Daten anzeigt,
- eine Emulationsvorrichtung zum Emulieren eines hochfahrbaren Bauelements ansprechend auf eine Erfassung des Anzeigers.

6. Die Bandlaufwerkvorrichtung gemäß Anspruch 5, bei der die Komponente zum Lesen des vorbestimmten Speicherungsorts durch die Datenübertragungsvorrichtung bereitgestellt ist.

7. Die Bandlaufwerkvorrichtung gemäß Anspruch 6, bei der die Komponente zum Lesen des vorbestimmten Speicherungsorts dahingehend angepasst ist, den Anzeiger aus einem Kassettenspeicher (110) zu lesen.

8. Ein Verfahren zum Speichern von Hochfahrbilddaten, wobei das Verfahren folgende Schritte aufweist:
- Empfangen der Hochfahrbilddaten (136),
- Übertragen der Hochfahrbilddaten auf ein sequentielles Speicherungsmedium einer Bandkassette (104),
- Übertragen von Anzeigerdaten, die anzeigen, dass die auf das sequentielle Speicherungsmedium übertragenen Daten Hochfahrbilddaten sind, auf einen nichtflüchtigen Speicherungsort der Bandkassette.

9. Das Verfahren gemäß Anspruch 8, bei dem die Anzeigerdaten in einem vorbestimmten Speicherungsort des nichtflüchtigen Speicherungsorts gespeichert sind.

10. Das Verfahren gemäß Anspruch 8 oder 9, das ferner ein Empfangen von Sicherungsdaten von einem Computer sowie ein Bestimmen, ob die Sicherungsdaten die Hochfahrbilddaten (136) aufweisen, aufweist, wobei die Anzeigerdaten nur ansprechend auf eine Bestimmung, die getroffen wird, dass die Sicherungsdaten die Hochfahrbilddaten aufweisen, in dem nichtflüchtigen Speicherungsort der Bandkassette (104) gespeichert werden.

11. Das Verfahren gemäß Anspruch 10, wobei das Bestimmen ein Empfangen eines Befehls aufweist, wobei die Anzeigerdaten ansprechend auf den Befehl in dem nichtflüchtigen Speicherungsort der Bandkassette gespeichert werden.

12. Das Verfahren gemäß Anspruch 11, bei dem der Befehl von einem Computer empfangen wird, der die Hochfahrbilddaten liefert.

13. Das Verfahren gemäß Anspruch 10, wobei das Bestimmen ein Untersuchen der von dem Computer empfangenen Sicherungsdaten aufweist, um die Sicherungsdaten als Hochfahrdaten zu identifizieren.

14. Das Verfahren gemäß Anspruch 8, wobei das Verfahren, zum Hochfahren eines Computer von einem sequentiellen Speicherungsbauelement unter Verwendung der Bandkassette (104), die das sequentielle Speicherungsmedium umfasst, folgende Schritte aufweist:
- Lesen der Anzeigerdaten aus einem vorbestimmten nichtflüchtigen Speicherungsort der Bandkassette (104),
- Verwenden der Anzeigerdaten zum Bestimmen, ob die Hochfahrbilddaten (136) auf dem sequentiellen Speicherungsmedium gespeichert sind,
- ansprechend auf eine Bestimmung, die getroffen wird, dass Hochfahrbilddaten auf dem sequentiellen Speicherungsmedium gespeichert sind, Emulieren eines hochfahrbaren Bauelements.

15. Das Verfahren gemäß Anspruch 14, bei dem der nichtflüchtige Speicherungsort sich auf dem sequentiellen Speicherungsmedium befindet.

16. Das Verfahren gemäß Anspruch 14 oder 15, wobei der nichtflüchtige Speicherungsort ein Halbleiterspeicher (110) der Bandkassette ist.

17. Das Verfahren gemäß Anspruch 14, 15 oder 16, bei dem eine Drahtlosschnittstelle (108) zum Lesen des vorbestimmten nichtflüchtigen Speicherungsorts verwendet wird.

18. Das Verfahren gemäß einem der Ansprüche 14 bis 17, bei dem das sequentielle Speicherungsbauelement ein Bandlaufwerk ist.

19. Das Verfahren gemäß einem der Ansprüche 14 bis 18, bei dem das emulierte hochfahrbare Bauelement ein emuliertes optisches Speicherungsbauelement ist.

20. Ein Computerprogrammprodukt zum Steuern eines sequentiellen Speicherungsbauelements, das Befehle aufweist zum:
- Empfangen von Hochfahrbilddaten (136),
- Übertragen der Hochfahrbilddaten auf ein sequentielles Speicherungsmedium einer Bandkassette (104),
- Übertragen von Anzeigerdaten, die anzeigen, dass die auf das sequentielle Speicherungsmedium übertragenen Daten die Hochfahrbilddaten sind, auf einen nichtflüchtigen Speicherungsort der Bandkassette.

21. Das Computerprogrammprodukt gemäß Anspruch 20, das betreibbar ist, um eine Ortanzeige zu lesen, die einen vorbestimmten Speicherungsort des nichtflüchtigen Speicherungsorts zur Speicherung der Anzeigerdaten auf der Bandkassette kennzeichnet.

22. Das Computerprogrammprodukt gemäß Anspruch 20 oder 21, das betreibbar ist, um von einem externen Computer erhaltene Sicherungsdaten auf ein Vorliegen von Hochfahrbilddaten hin zu untersuchen, wobei die Anzeigerdaten nur ansprechend auf eine Bestimmung, die getroffen wird, dass die Sicherungsdaten die Hochfahrbilddaten aufweisen, in dem nichtflüchtigen Speicherungsort der Bandkassette gespeichert werden.

23. Das Computerprogrammprodukt gemäß Anspruch 20, 21 oder 22, das betreibbar ist, um einen externen Befehl zu empfangen und auszuführen, um die Anzeigerdaten in dem nichtflüchtigen Speicherungsort der Bandkassette zu speichern.

24. Das Computerprogrammprodukt gemäß Anspruch 20 zum Steuern eines sequentiellen Speicherungsbauelements (100), das Befehle aufweist zum:
- Lesen eines vorbestimmten Speicherungsorts eines nichtflüchtigen Speicherungsorts einer Bandkassette (104), um zu bestimmen, ob Hochfahrbilddaten auf einem sequentiellen Speicherungsmedium der Bandkassette gespeichert sind,
- wenn Hochfahrbilddaten (136) auf dem sequentiellen Speicherungsmedium gespeichert sind, Bewirken, dass das sequentielle Speicherungsbauelement (100) ein hochfahrbares Bauelement emuliert.

25. Das Computerprogrammprodukt gemäß Anspruch 24, das betreibbar ist, um zu bewirken, dass das sequentielle Speicherungsbauelement ein optisches Speicherungsbauelement emuliert.

## Revendications

1. Dispositif d'entraînement de bande (100) adapté pour :
➢ recevoir des données d'image amorce (136),
➢ transférer les données d'image amorce sur un
support de stockage séquentiel d'une cartouche de bande (104),
➢ transférer vers un emplacement de stockage non
volatil de la cartouche de bande (104) des données d'indicateur indiquant que les données transférées sur le support de stockage séquentiel sont des données d'image amorce.

2. Dispositif d'entraînement de bande selon la revendication 1, dans lequel l'emplacement de stockage non volatil se trouve sur le support de stockage séquentiel.

3. Dispositif d'entraînement de bande selon la revendication 1 ou 2, dans lequel l'emplacement de stockage non volatil se trouve dans une mémoire semi-conductrice (110) de la cartouche de bande.

4. Dispositif d'entraînement de bande selon la revendication 1, 2 ou 3, dans lequel les données d'indicateur peuvent être transférées au moyen d'une interface sans fil (108) vers l'emplacement de stockage non volatil.

5. Dispositif d'entraînement de bande selon la revendication 1, comprenant :
➢ un dispositif de transfert de données pour
transférer des données amorçables entre la cartouche de bande chargée (104) et le dispositif d'entraînement de bande (100),
➢ un élément pour lire un emplacement de
stockage prédéterminé d'un emplacement de stockage non volatil de la cartouche de bande dans le but de déterminer une présence d'un indicateur indiquant des données amorçables stockées sur la cartouche de bande,
➢ un dispositif d'émulation pour émuler un dispositif amorçable en réponse à une détection de l'indicateur.

6. Dispositif d'entraînement de bande selon la revendication 5, dans lequel l'élément pour lire l'emplacement de stockage prédéterminé est constitué par le dispositif de transfert de données.

7. Dispositif d'entraînement de bande selon la revendication 6, dans lequel l'élément pour lire l'emplacement de stockage prédéterminé est adapté pour lire l'indicateur à partir d'une mémoire de cartouche (110).

8. Procédé de stockage de données d'image amorce, le procédé comprenant les étapes consistant à :
➢ recevoir les données d'image amorce (136),
➢ transférer les données d'image amorce sur un
support de stockage séquentiel d'une cartouche de bande (104),
➢ transférer vers un emplacement de stockage non
volatil de la cartouche de bande (104) des données d'indicateur indiquant que les données transférées sur le support de stockage séquentiel sont des données d'image amorce.

9. Procédé selon la revendication 8, dans lequel les données d'indicateur sont stockées dans un emplacement de stockage prédéterminé de l'emplacement de stockage non volatil.

10. Procédé selon la revendication 8 ou 9, comprenant par ailleurs les étapes consistant à recevoir des données de sauvegarde en provenance d'un ordinateur, et à déterminer si les données de sauvegarde comprennent - ou non - les données d'image amorce (136) ; les données d'indicateur étant stockées dans l'emplacement de stockage non volatil de la cartouche de bande (104) uniquement en réponse au fait qu'une détermination est réalisée selon laquelle les données de sauvegarde comprennent les données d'image amorce.

11. Procédé selon la revendication 10, dans lequel l'étape de détermination comprend l'étape consistant à recevoir une instruction de commande, moyennant quoi les données d'indicateur sont stockées dans l'emplacement de stockage non volatil de la cartouche de bande en réponse à l'instruction de commande.

12. Procédé selon la revendication 11, dans lequel l'instruction de commande est reçue en provenance d'un ordinateur qui fournit les données d'image amorce.

13. Procédé selon la revendication 10, dans lequel l'étape de détermination comprend l'étape consistant à examiner les données de sauvegarde reçues de l'ordinateur dans le but d'identifier les données de sauvegarde comme étant des données amorce.

14. Procédé selon la revendication 8, le procédé comprenant, pour lancer un ordinateur à partir d'un dispositif à support de stockage séquentiel utilisant la cartouche de bande (104)comprenant le support de stockage séquentiel, les étapes consistant à :
➢ lire les données d'indicateur à partir d'un emplacement de stockage non volatil prédéterminé de la cartouche de bande (104),
➢ utiliser les données d'indicateur afin de déterminer si les données d'image amorce (136) sont stockées - ou non - sur le support de stockage séquentiel,
➢ en réponse à une détermination selon laquelle les données d'image amorce sont stockées sur le support de stockage séquentiel, émuler un dispositif amorçable.

15. Procédé selon la revendication 14, dans lequel l'emplacement de stockage non volatil se trouve sur le support de stockage séquentiel.

16. Procédé selon la revendication 14 ou 15, dans lequel l'emplacement de stockage non volatil se trouve dans une mémoire semi-conductrice (110) de la cartouche de bande.

17. Procédé selon la revendication 14, 15 ou 16, dans lequel une interface sans fil (108) est utilisée pour lire l'emplacement de stockage non volatil prédéterminé.

18. Procédé selon l'une quelconque des revendications 14 à 17, dans lequel le dispositif à support de stockage séquentiel est un lecteur de bande.

19. Procédé selon l'une quelconque des revendications 14 à 18, dans lequel le dispositif amorçable émulé se trouve dans un dispositif de stockage optique émulé.

20. Produit programme d'ordinateur pour contrôler un dispositif de stockage séquentiel comprenant des instructions pour :
➢ recevoir des données d'image amorce (136),
➢ transférer les données d'image amorce sur un support de stockage séquentiel d'une cartouche de bande (104),
➢ transférer vers un emplacement de stockage non volatil de la cartouche de bande des données d'indicateur indiquant que les données transférées sur le support de stockage séquentiel sont des données d'image amorce.

21. Produit programme d'ordinateur selon la revendication 20, adapté pour lire une indication d'emplacement identifiant un emplacement de stockage prédéterminé de l'emplacement de stockage non volatil en vue d'un stockage des données d'indicateur sur la cartouche de bande.

22. Produit programme d'ordinateur selon la revendication 20 ou 21, adapté pour examiner des données de sauvegarde reçues d'un ordinateur externe à la recherche de la présence de données d'image amorce ; les données d'indicateur étant stockées dans l'emplacement de stockage non volatil de la cartouche de bande uniquement en réponse au fait qu'une détermination est réalisée selon laquelle les données de sauvegarde comprennent les données d'image amorce.

23. Produit programme d'ordinateur selon la revendication 20, 21 ou 22, adapté pour recevoir et exécuter une instruction de commande externe commandant de stocker les données d'indicateur dans l'emplacement de stockage non volatil de la cartouche de bande.

24. Produit programme d'ordinateur selon la revendication 20, pour contrôler un dispositif de stockage séquentiel (100) comprenant des instructions pour :
➢ lire un emplacement de stockage prédéterminé d'un emplacement de stockage non volatil d'une cartouche de bande (104) dans le but de déterminer si des données d'image amorce sont stockées sur un support de stockage séquentiel de la cartouche de bande,
➢ si des données d'image amorce (136) sont stockées sur le support de stockage séquentiel, amener le dispositif à support de stockage séquentiel (100) à émuler un dispositif amorçable.

25. Produit programme d'ordinateur selon la revendication 24, adapté pour amener le dispositif de stockage séquentiel à émuler un dispositif de stockage optique.
